# EUROPÄISCHE PATENTSCHRIFT

(11) **EP 2 486 369 B1**
(45) Veröffentlichungstag und Bekanntmachung des Hinweises auf die Patenterteilung: **31.12.2014**
(21) Anmeldenummer: 10768220.5
(22) Anmeldetag: 06.10.2010
(51) Int. Cl.: G01B 21/04

(54) **KOORDINATENMESSGERÄT MIT LAGEÄNDERUNGSSENSOREN**
COORDINATE MEASURING DEVICE HAVING POSITIONAL CHANGE SENSORS
APPAREIL DE MESURE DE COORDONNÉES COMPRENANT DES CAPTEURS DE CHANGEMENT DE POSITION

(30) Priorität: 06.10.2009 DE 102009049534
(43) Veröffentlichungstag der Anmeldung: 15.08.2012
(60) Teilanmeldung: 12196764.0
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2010/064869
(87) Internationale Veröffentlichungsnummer: WO 2011/042449

(56) Entgegenhaltungen:
- WO-A1-2007/015677
- DE-A1- 4 342 312
- DE-A1- 10 030 570
- DE-A1- 19 637 554
- DE-A1-102007 051 984
- DE-A1-102007 053 546
- GB-A- 2 045 938
- US-A1- 2002 095 975

## Beschreibung

Die vorliegende Erfindung betrifft ein Koordinatenmessgerät mit einem Sensor zum Vermessen eines Objekts und mit einer Gehäusestruktur zum Halten und Positionieren des Sensors.

Ein derartiges Koordinatenmessgerät ist beispielsweise aus der Druckschrift DE 10 2007 022 326 A1 oder der Druckschrift DE 100 20 842 A1 bekannt.

Gemäß einem weiteren Aspekt betrifft die vorliegende Erfindung ein Verfahren zur Kollisionserkennung eines Koordinatenmessgeräts mit einem taktilen Sensor zum Vermessen eines Objekts und mit einer Gehäusestruktur zum Halten und Positionieren des taktilen Sensors.

Ein Verfahren zur Erkennung der Kollision eines taktilen Sensors mit einem zu vermessenden Objekt ist beispielsweise in der Druckschrift WO 2004/106854 A1 beschrieben.

Ein Beispiel für ein solches Koordinatenmessgerät mit einem optischen Sensor ist in der Druckschrift DE 100 20 842 A1 beschrieben.

Dreidimensionale Koordinatenmessgeräte mit bis zu sechs Freiheitsgraden werden in weiten Bereichen der industriellen Messtechnik verwendet, um Objekte unter höchsten Genauigkeitsanforderungen zu vermessen. Beispielsweise wird auf diese Weise eine Form von maschinell hergestellten Werkstücken zur Qualitätskontrolle überprüft. Dazu sind grundsätzlich Koordinatenmessgeräte bekannt, die beispielsweise mit optischen Sensoren oder aber mit taktilen Sensoren arbeiten.

Bei den optischen Sensoren handelt es sich in der Regel um optische Tastköpfe, wie beispielsweise Triangulationstaster oder Videokameras, die eine Auswerteelektronik aufweisen. Ein Systemtakt dieser Auswerteelektronik ist im Beispiel einer Videokamera durch die Videofrequenz der Kamera festgelegt. Derartige optische Sensoren können von Vorteil sein, wenn es darum geht, ein Objekt berührungsfrei zu vermessen. Optische Sensoren stoßen jedoch an Grenzen, wenn Objekte mit komplexen Formen zu vermessen sind, da dann der Fall eintreten kann, dass Details des Objekts nicht in einer Bildaufnahme des optischen Sensors liegen und somit nicht erfasst werden können.

Derartige optische Sensoren werden beispielsweise unter der Bezeichnung "ViSCAN®" von der Anmelderin vertrieben.

Ein taktiler Sensor wird in der Regel in Form einer Tastspitze bereitgestellt, die dreidimensional auslenkbar gelagert ist und deren Auslenkung mittels des taktilen Sensors erfasst werden kann. Für den Messvorgang wird die Tastspitze bzw. der Taststift so weit an das zu vermessende Objekt herangefahren, dass er einen gewünschten Messpunkt an dem Objekt berührt. Die Tastspitze und die die Auslenkung der Tastspitze erfassenden Sensoren werden zusammenfassend auch als Tastkopf bezeichnet. Der Tastkopf ist in der Regel in einer geeigneten Verschiebeeinrichtung angebracht, die eine dreidimensionale Bewegung des Tastkopfs mit bis zu sechs Freiheitsgraden ermöglicht. Aus der jeweiligen Stellung des Tastkopfes und der relativen Lage des Taststiftes zum Tastkopf, die mittels des Sensors erfasst wird, kann die Raumkoordinate eines angetasteten Messpunktes mit hoher Genauigkeit bestimmt werden.

Ein derartiger taktiler Sensor ist etwa in der Druckschrift DE 10 2004 011 728 A1 beschrieben und wird von der Anmelderin beispielsweise unter der Bezeichnung "VAST® XXT" vertrieben.

Um bei derartigen taktilen oder optischen Sensoren die hohen Genauigkeitsanforderungen an die Messergebnisse erfüllen zu können, ist es notwendig, eine Bewegung des Sensors während eines Messvorgangs genau erfassen zu können. Bei taktilen Sensoren können Bewegungen des Sensors während des Antastens zu Verbiegungen führen, die bei einer Auswertung der Messergebnisse unbedingt zu berücksichtigen sind. Bei optischen Sensoren, beispielsweise bei CCD-Kameras, führt eine Bewegung während des Messvorgangs zu einer "Verschmierung" des aufgenommenen Bildes, das dann unscharf erscheint. Zwar ist es möglich, die Bewegung eines Sensors während des Messvorgangs durch anschließende rechnerische Nachbearbeitung aus dem Messergebnis zu eliminieren, dafür ist es aber zwingend notwendig, dass der Bewegungsvorgang bzw. die Bahndaten des Sensors während des Messens mit hinreichender Genauigkeit bekannt ist.

Zur Verschiebung der taktilen und der optischen Sensoren ist regelmäßig eine Gehäusestruktur vorgesehen, die ein Verschieben der Sensoren in allen drei Raumrichtungen (X, Y, Z) ermöglicht. Des Weiteren kann ein sogenanntes Dreh-Schwenk-Gelenk (DSG) vorgesehen sein, die ein Ausrichten des Sensors entlang eines gewünschten Richtungsvektors ermöglicht. Ein derartiges DSG wird von der Anmelderin beispielsweise unter den Bezeichnungen "DSE" und "RDS" vertrieben.

Während des Betriebs eines Koordinatenmessgeräts wird die Position des Sensors bzw. des Sensorkopfs typischerweise entlang der drei Raumrichtungen bestimmt und in Form von Positionsdaten gespeichert. Dazu werden lineare oder rotatorische Messsysteme verwendet, die die Position bzw. die Lage mit einem für das Koordinatenmessgerät typischen Auslesetakt bestimmt. Üblicherweise liegt dieser Auslesetakt in einem Frequenzbereich von einigen zehn Hertz (Hz) bis wenigen Kilohertz (kHz).

Die Positionsdaten werden dazu benutzt, einen Positionsverlauf zu erstellen und durch Ableitung dieser Größe die Geschwindigkeit bzw. durch erneute Ableitung die Beschleunigung des Sensors oder der Gehäusestruktur zu errechnen. Die Geschwindigkeit oder die Beschleunigung des Sensors oder der Gehäusestruktur wird dabei jedoch nicht unmittelbar erfasst. Durch die Tatsache, dass für die zeitliche Veränderung der Lage des Sensors mehrere Positionen gemessen werden müssen und diese mit einer durch die Messfrequenz der Ausleserate nur begrenzte Anzahl und somit Dichte vorliegen, ist auch die Veränderung bzw. Ableitung nur mit limitierter Auflösung bestimmbar. Wie aufgrund des Nyquist-Theorems allgemein bekannt ist, ist jedoch eine Mindestauflösung notwendig, um dynamische Änderungen bzw. Wellenbewegungen erfassen zu können. Auch unstetige Änderungen, wie sie bei einer mechanischen Antastung und/oder Kollision entstehen, sind aufgrund der begrenzten Auflösung gegenwärtig nur schwer zu erkennen bzw. müssen eine gewisse minimale Größe haben, um erfasst zu werden.

Aufgrund konstruktiver Randbedingungen ist bei den meisten Lagebestimmungssystemen von Koordinatenmessgeräten im Aufbau zudem das Abbesche Komparatorprinzip verletzt. Somit können bei der Messung durch eine Verbiegung des Systems Kippfehler auftreten und dynamische Effekte nur bedingt berücksichtigt werden. Zwar werden diese Effekte gegenwärtig über Modellparameter näherungsweise beschrieben und bei der Messung als Korrekturwerte berücksichtigt, da eine dynamische Verbiegung des Koordinatenmessgeräts aber durchaus mehrere µm betragen kann, ist für eine genaue Messung die Kenntnis der tatsächlichen Umstände wünschenswert.

Dann wäre man dazu in der Lage, das Antastverhalten eines taktilen Sensors bzw. die Bahndaten eines berührungsfrei messenden Sensors besser zu überwachen und die Messergebnisse von sowohl taktilen als auch insbesondere optischen Sensoren besser zu korrigieren, um so genauere Messergebnisse zu erhalten.

Weitere Koordinatenmessgeräte und Verfahren der eingangs genannten Art zeigen die Druckschriften DE 10 2007 051984 A1, DE 196 37 554 A1, DE 43 42 312 A1, US 2002/095975 A1, DE 10 2007 053546 A1, DE 100 30 570 A1, GB 2 045 938 A und WO 2007/015677 A1.

Eine objektive Aufgabe der vorliegenden Erfindung liegt zum ersten somit darin, ein Bewegungsverhalten eines Sensors eines Koordinatenmessgeräts der eingangs genannten Art besser zu bestimmen.

Eine weitere objektive Aufgabe besteht darin, mittels des so bekannten Bewegungsverhaltens die Antastung eines taktilen Sensors besser zu überwachen.

Zur Lösung der vorstehend beschriebenen Aufgabe wird vorgeschlagen, ein Koordinatenmessgerät der eingangs genannten Art dahingehend weiterzubilden, dass mindes-tens ein Lageänderungssensor vorhanden ist, um eine Lageänderung des Sensors und der Gehäusestruktur zu erfassen, der Sensor zum Vermessen des Objekts ein taktiler Sensor ist, und ein erster Lageänderungssensor vorhanden ist, um eine erste Beschleunigung des taktilen Sensors zu erfassen, und mindestens ein zweiter Lageänderungssensor vorhanden ist, um eine zweite Beschleunigung der Gehäusestruktur zu erfassen, wobei eine Richtung der ersten Beschleunigung und eine Richtung der zweiten Beschleunigung identisch sind.

Für die Anwendung in Koordinatenmessgeräten mit taktilen Sensoren ist es hilfreich, etwa die in einem Tastkopf gegeneinander verschiebbaren Teile, beispielsweise das Gehäuse und die Aufnahme des Taststifts, jeweils getrennt mit Lageänderungssensoren auszustatten. So kann aus der Differenz der entsprechenden Messsignale des ersten und des zweiten Sensors eine Antastung früher detektiert werden. Von besonderem Vorteil ist, dass die Messrate der Lageänderungssensoren unabhängig und damit in einer höheren Frequenz erfolgen kann als die Messung der Lage des Koordinatenmessgeräts erfolgt, aus der abgeleitet bisher Beschleunigungsdaten gewonnen wurden.

Taktile vorhanden umfassen hierbei einen Sensoren Taststift mit den die Auslenkung des Taststifts erfassenden Sensoren. Die übrige Halterung und Lagerung sowie die Verschiebeeinrichtung zur Bewegung des Sensors werden zusammenfassend als Gehäusestruktur bezeichnet.

Durch die unmittelbare Erfassung einer ersten Beschleunigung an dem Sensor und einer zweiten Beschleunigung an der Gehäusestruktur ist man dazu in der Lage, ein Bewegungsverhalten des Sensors während eines Messvorgangs mit wesentlich höherer Auflösung und Genauigkeit zu erfassen, als dies durch Ableitung von Positionsdaten der Fall war. Änderungen im Bewegungsverhalten werden somit nicht nur schneller erfasst, man ist darüber hinaus auch dazu in der Lage, dynamische Vorgänge mit höheren Frequenzen und unstetige Änderungen im Bewegungsverhalten, beispielsweise Kollisionen, unmittelbar zu erfassen und bei der Regelung des Koordinatenmessgeräts und der Auswertung der Messergebnisse zu berücksichtigen.

Gemäß einem weiteren Aspekt der vorliegenden Erfindung wird vorgeschlagen, ein Verfahren der eingangs genannten Art mit den folgenden Schritten auszuführen:
Bestimmen mindestens einer Lageänderung des taktilen Sensors und der Gehäusestruktur mittels mindestens eines Lageänderungssensors,
Vergleichen der mindestens einen Lageänderung mit mindestens einem entsprechenden Sollwert,
Verbringen des Koordinatenmessgeräts in einen sicheren Zustand, falls die mindestens eine Lageänderung um ein vorbestimmtes Maß von dem mindestens einen entsprechenden Sollwert abweicht, wobei eine erste Beschleunigung des taktilen Sensors mittels eines ersten Lageänderungssensors gemessen wird und mindestens eine zweite Beschleunigung der Gehäusestruktur mittels mindestens eines zweiten Lageänderungssensors gemessen wird, wobei die erste Beschleunigung der Sollwert ist und die zweite Beschleunigung mit dem Sollwert verglichen wird.

Kumulativ kann auch weiterhin ein Vergleich mit einem zweiten Sollwert erfolgen, der ein festgelegter Maximalwert ist.

Auf diese Weise wird es möglich, zwischen einer Kollision der Gehäusestruktur mit einem Hindernis und einem Antasten des Taststifts an ein zu vermessendes Objekt zu unterscheiden. Bei einer Kollision der Gehäusestruktur des Koordinatenmessgeräts würden sowohl die Lageänderungssensoren der Gehäusestruktur als auch des Taststifts bzw. des Sensors sich gleichartig verhalten und ähnliche Abweichungen von einer gewollten Bewegung des Koordinatenmessgeräts bzw. eine gleichartige Überschreitung des festgelegten Maximalwerts ausgeben. Bei einem Antasten des Taststifts an ein zu vermessendes Objekt würde eine Differenz zwischen dem ersten Lageänderungssensor und dem zweiten Lageänderungssensor auftreten, so dass eine Antastung erkannt werden kann. Bei einer Kollision eilt dabei das Signal der Gehäusestruktur dem Signal des Taststiftes voraus, bei einer Antastung eilt das Signal des Taststiftes dem der Gehäusestruktur voraus.

Für eine Kollisionserkennung sind alle Beschleunigungen nutzbar, die größer als die maximale Maschinenbeschleunigung sind. Wird die Messeinheit zudem noch mit der Information versorgt, welche Beschleunigung gerade gefahren wird, so kann das Koordinatenmessgerät eine Abweichung in Richtung und/oder Amplitude als mögliche Kollision erkennen und so die Maschine sofort in einen sicheren Zustand bringen, z.B. einen Freilauf der entsprechenden Achse bewirken oder die Bewegung des Koordinatenmessgeräts anhalten.

Eine weitere wichtige Information kann aus der Erfassung der Beschleunigung am bzw. in der Nähe des taktilen Sensors erhalten werden. Durch unvermeidliche Nachgiebigkeiten im Koordinatenmessgerät ist eine Bewegung des Sensors nicht zwingend gleich einer Bewegung der Koordinatenachsen bzw. Messachsen der Lagesensoren. Durch Messen der Beschleunigungsdaten unmittelbar können diese aber in der Nähe des Messorts bestimmt werden und so unabhängig oder in Ergänzung von Modellparametern des Koordinatenmessgeräts bestimmt werden.

So können die mittels der Lageänderungssensoren erfassten Signale dazu verwendet werden, um die aktuelle Position und Orientierung des Sensors zu bestimmen, das Antriebsverhalten des Koordinatenmessgeräts in Bezug auf die tatsächlich am Sensor wirkende Beschleunigung bzw. Geschwindigkeit zu überwachen und Unstetigkeiten im Antriebsverhalten, beispielsweise Ruckeln, Schlupf oder Frequenzanregungen, zu überwachen. Insbesondere wird es so möglich, das Antriebsverhalten des gesamten Koordinatenmessgeräts selbstlernend zu optimieren, um so zu einer optimalen Messleistung in Bezug auf Genauigkeit und/oder Geschwindigkeit zu gelangen. Da tatsächliche Beschleunigungen am Sensor bekannt sind, kann eine aufwändige Entwicklung von Modellparametern für das Koordinatenmessgerät entfallen. Zudem kann sich das Koordinatenmessgerät anhand der tatsächlichen Beschleunigungsdaten selber optimieren. Ferner können so auch Probleme bei der Modellbildung, wie z.B. einer Exemplarstreuung, vermieden werden, wo vorgegebene fixe Parametersätze nicht zu zufriedenstellenden Ergebnissen führen.

Die eingangs gestellte Aufgabe wird somit vollkommen gelöst.

In einer bevorzugten Ausführungsform kann vorgesehen sein, dass mehrere Lageänderungssensoren vorgesehen sind, um eine erste Beschleunigung des Sensors und eine zweite Beschleunigung der Gehäusestruktur in drei Raumrichtungen zu erfassen. Durch Erfassen von Beschleunigungen in allen drei Raumrichtungen können auch nicht geplante Abweichungen, wie z.B. Querbewegungen, erkannt werden.

Die Lageänderungssensoren können dabei zur Erfassung einer linearen und/oder rotatorischen Beschleunigung ausgelegt sein. Es können lediglich lineare Lageänderungssensoren oder lediglich rotatorische Lageänderungssensoren vorgesehen sein, es ist jedoch selbstverständlich auch möglich, lineare und rotatorische Lageänderungssensoren in geeigneter Weise zu kombinieren, beispielsweise einen linearen und zwei rotatorische Lageänderungssensoren vorzusehen. Grundsätzlich kann natürlich auch vorgesehen sein, bis zu drei lineare Lageänderungssensoren und zusätzlich auch drei rotatorische Lageänderungssensoren vorzusehen, etwa wenn eine erhöhte Erfassungsgenauigkeit für ein bestimmtes Koordinatenmessgerät notwendig ist.

Grundsätzlich ist die Veränderung der Beschleunigung, beispielsweise bei Antastungen oder Kollisionen, am größten und kann somit am besten erfasst werden. Technisch ist die Auswertung der Veränderung der Beschleunigung somit vorteilhaft, da sie als zweite zeitliche Ableitung der Lage die größte Veränderung zeigt. Lageänderungssensoren, ausgefürt als Beschleunigungssensoren, sind auf dem Markt frei verfügbar, so dass sie dem Durchschnittsfachmann bekannt sind und eine weitere Beschreibung an dieser Stelle nicht notwendig ist. Eine Auswahl möglicher Lageänderungssensoren kann der folgenden Tabelle entnommen werden:

**Tabelle 1**

| **Typ** | **Hersteller** | **Achsen** | **Technologie** | **Messbereich** | **Sensibilität Auflösung** |
|---|---|---|---|---|---|
| ADXRS 613 | Analog Devices | Single Axis (YAW) | MEMS | +/-150°/s | 12,5 mV/°/s |
| XV-3500CB | Seiko-Epson | Single Axis (YAW) | Quartz crystal | +/-100 °/s | 0,67 mV /°/s |
| IDG-1123 | Invensense | Dual Axis (Roll + PITCH) | MEMS | +/-43°/s | 23 mV/°/s |
| ENC-03R | Murata | Single Axis (PITCH) | Quartz crystal | +/-300°/s | 0,67 mV /°/s |
| CG-L43 | NEC-TOKIN | Single Axis (YAW) | Quartz crystal | +/-90 °/s | 0,66 mV/°/s |
| EWTS-98 | Panasonic | Dual Axis (Roll + PITCH) | MEMS | +/-15°/s (98C) | 65 mV/°/s (98C) 38 |
| | | | | +/-30°/s (98L) | mV/°/s (98L) 2 |
| | | | | +/-300°/s (98V) | mV/°/s (98V) |
| CRG-20-01 | Silicon Sensing | Single Axis (YAW) | MEMS | +/-75°/s | 26,67 mV/°/s |
| LPR-503AL | ST-Micro | Dual Axis (Pitch + YAW) | MEMS | +/-30 °/s oder +/-120 °/s | 33,3 mV/°/s oder 8,3 mV/°/s |

Dabei steht die Bezeichnung "Single Axis" für Sensoren, die Beschleunigungen um eine Achse erfassen, und die Bezeichnung "Dual Axis" für Sensoren, die eine Beschleunigung um zwei Achsen erfassen. Bezüglich der Achsen steht die Bezeichnung "YAW" dabei für eine Gierbewegung, die Bezeichnung "Roll" für eine Rollbewegung und die Bezeichnung "PITCH" für eine Neigungsbewegung. Die Abkürzung "MEMS" steht dabei für ein mikroelektromechanisches System. Die Abkürzung "SPI" steht dabei für "System Packet Interface", eine optische Schnittstelle. Die Abkürzung "I2C" steht für einen seriellen Schnittstellenstandard der Firma Philips.

Grundsätzlich kann vorgesehen sein, dass eine Auswerteeinheit zum Auswerten der Lageänderungsdaten bzw. Beschleunigungsdaten des Lageänderungssensors integriert in dem Mess- bzw. Tastkopf vorgesehen ist, um ein möglichst kompaktes System zu erhalten. Bei der technischen Ausgestaltung ist dann jedoch darauf zu achten, dass die Auswertung nur einen möglichst geringen Energieverbrauch aufweist und somit nur eine geringe Wärmeerzeugung vorliegt. Ansonsten könnte die von der Auswerte einheit erzeugte Wärme das Messergebnis negativ beeinflussen. Gegebenenfalls ist die Auswerteeinheit thermisch vom messenden System abzukoppeln.

Es kann vorgesehen sein, dass eine Beschleunigungsmessung in regelmäßigen Abständen, insbesondere in einem Vielfachen vom Systemtakt, überprüft wird. Dies kann durch Fortschreibung der Beschleunigung und ihre Integration auf die entsprechende Geschwindigkeit und weitere Integration auf die entsprechende Lage erfolgen. Die so erlangten Lagedaten können dann beispielsweise mit den Daten der Lagesensoren des Koordinatenmessgeräts, die unmittelbar die Lage des Sensors in drei Raumrichtungen feststellen, verglichen werden. So kann ein Auseinanderdriften der Messungen verhindert werden und stabilere Daten sowie eine sichere Messung erreicht werden.

Bei dem Verfahren zur Kollisionserkennung eines Koordinatenmessgeräts kann vorgesehen sein, dass der Sollwert ein für das Koordinatenmessgerät festgelegter Maximalwert ist, und dass das Verbringen erfolgt, falls die mindestens eine Lageänderung größer als der Maximalwert ist. Alternativ kann der Maximalwert auch dynamisch von einer Steuerungseinheit des Koordinatenmessgeräts aktualisiert werden, etwa so wie er in der gewünschten Bewegungsbahn auftritt. Es kann einen Sicherheitsaufschlag vorgesehen sein, um Fehlabschätzungen zu vermeiden.

Auf diese Weise kann mittels eines absoluten Werts eine Kollision des Koordinatenmessgeräts mit einem Hindernis festgestellt werden.

Grundsätzlich ist es allgemein des Weiteren auch denkbar, dass die Lageänderungssensoren in Dreh-Schwenk-Einheiten dazu verwendet werden, dynamische und statische Verkippungen während eines Schwenkablaufs zu erfassen, womit ebenfalls eine genauere Korrektur der Messergebnisse möglich wird, als dies mit quasi-starren Modellen der Dreh-Schwenk-Einheit als Teilsystem des gesamten Koordinatenmessgeräts möglich ist.

Des Weiteren ist es grundsätzlich allgemein denkbar, dass die Lageänderungssensoren als aktives Feedbacksystem für eine Bewegungsregelung des Koordinatenmessgeräts verwendet werden, insbesondere, um eine ruckfreie Steuerung des Koordinatenmessgeräts zu ermöglichen. Mögliche Störungen einer solchen ruckfreien Bewegung könnten durch die Lageänderungssensoren erfasst und berücksichtigt werden.

Ausführungsbeispiele der Erfindung (sowie nich beanspruchte Beispiele) sind in der Zeichnung dargestellt und werden in der nachfolgenden Beschreibung näher erläutert. Es zeigen:
- Fig. 1: ein System zum Vermessen eines Objekts mit einem Koordinatenmessgerät,
- Fig. 2a: eine schematische Ansicht möglicher Sensorpositionen in einem Koordinatenmessgerät mit einem taktilen Sensor,
- Fig. 2b: eine schematische Ansicht möglicher Sensorpositionen in einem (nicht beanspruchten) Koordinatenmessgerät mit einem optischen Sensor,
- Fig. 3: eine schematische Ansicht möglicher Sensorpositionen in einem weiteren Koordinatenmessgerät mit einem taktilen Sensor,
- Fig. 4: ein schematisches Ablaufdiagramm eines Verfahrens zur Kollisionserkennung eines Koordinatenmessgeräts, und
- Fig. 5: ein schematisches Ablaufdiagramm eines (nicht beanspruchten) Verfahrens zur Korrektur von Bilddaten.

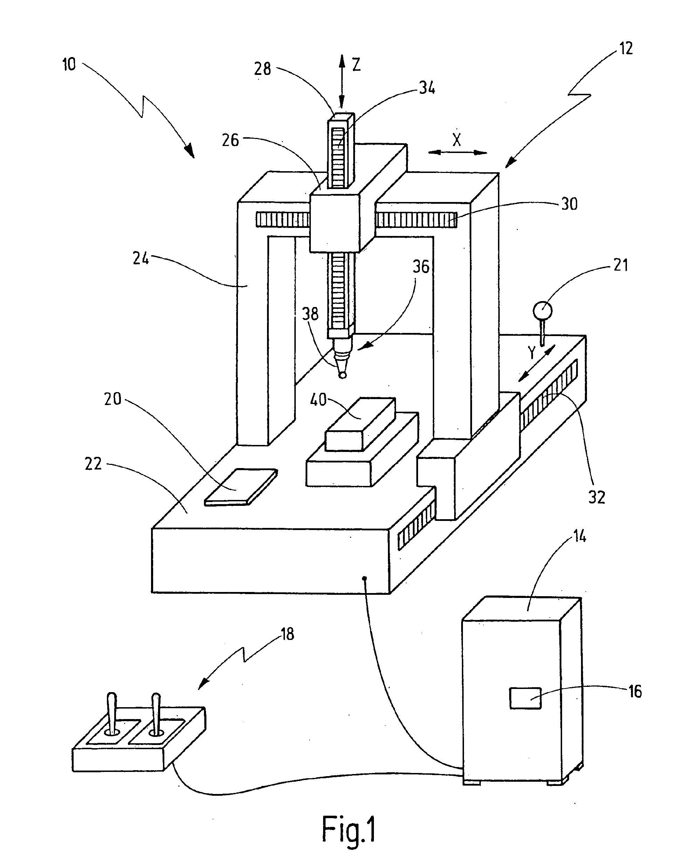

Fig. 1 zeigt ein System 10 das zum Durchrühren eines Verfahrens zur Kollisionserfassung oder eines (nicht beanspruchten) Verfahrens zur Korrektur von Bildaten verwendet werden kann. Das System 10 weist ein Koordinatenmessgerät 12 und eine Steuerungseinheit 14 zum Steuern des Koordinatenmessgeräts 12 auf. Die Steuerungseinheit 14 weist eine Recheneinheit 16, beispielsweise einen Computer, auf.

Die Steuerungseinheit 14 ist lediglich schematisch als Block dargestellt, grundsätzlich kann die Steuerungseinheit 14 alle zur Steuerung des Koordinatenmessgeräts 12 notwendigen Elemente, beispielsweise Tastaturen, Monitore oder eine Bedienkonsole 18, aufweisen. Des Weiteren umfasst die Steuerungseinheit 14 auch Ausgabemittel, um die durch das Koordinatenmessgerät 12 gewonnenen Daten in geeigneter Form, beispielsweise elektronisch oder in Papierform, auszugeben. Obwohl das Koordinatenmessgerät 12 mittels der Bedienkonsole 18 auch manuell bedient werden kann, ist die Steuerungseinheit 14 auch dazu in der Lage, Mess- und Kalibriervorgänge automatisiert durchzuführen.

Des Weiteren kann das System 10 eine Kraftmesseinrichtung 20, beispielsweise in Form einer Waage oder Kraftmessdose, aufweisen. Ferner ist eine Einmesskugel 21 vorgesehen. Die Kraftmesseinrichtung 20 und die Einmesskugel 21 sind auf einer Grundplatte 22 des Koordinatenmessgeräts 12 angeordnet. Die Kraftmesseinrichtung 20 und die Einmesskugel 21 dienen zum Kalibrieren des Koordinatenmessgeräts 12, ein solches Kalibrationsverfahren ist beispielsweise in der Druckschrift EP 1 051 596 B1 beschrieben. Dieses dient zum Bestimmen von Korrekturparametern des Koordinatenmessgeräts 12, beispielsweise von einer Nachgiebigkeitsmatrix.

An der Grundplatte 22 ist ein Portal 24 vorgesehen, das an der Grundplatte 22 entlang einer ersten Achse (Y) verschiebbar ist. An dem Portal 24 wiederum ist ein Schlitten 26 vorgesehen, der entlang dem Portal 24 in einer zweiten Richtung (X) verschiebbar ist. An dem Schlitten 26 ist eine Pinole 28 vorgesehen, die entlang dem Schlitten 26 in eine dritte Richtung (Z) verschiebbar ist. Die drei Richtungen (X, Y, Z) stehen jeweils senkrecht aufeinander und bilden die Achsen eines absoluten Koordinatensystems (X, Y, Z).

An dem Portal 24 ist eine Skala 30 in X-Richtung, an der Grundplatte 22 eine Skala 32 in Y-Richtung und an der Pinole 28 eine Skala 34 in Z-Richtung vorgesehen. Die Skalen 30, 32, 34 dienen dazu, die Position eines an der Pinole 28 angebrachten Sensors 36 auszulesen. Dazu können die Skalen 30, 32, 34 derart ausgebildet sein, dass ein manuelles Ablesen einer jeweiligen Koordinate möglich ist, insbesondere sind die Skalen 30, 32, 34 jedoch derart ausgebildet, dass eine jeweilige Koordinate durch eine entsprechende Erfassungseinrichtung (nicht dargestellt) erfasst und elektronisch an die Steuerungseinheit 14 übermittelt wird. Die Skalen 30, 32, 34 dienen somit als Lagesensoren zur Erfassung der Lage des Sensors 36.

Der an der Pinole 28 angebrachte Sensor 36 weist in der dargestellten Ausführungsform einen Taster bzw. eine Tastspitze 38 auf, die auslenkbar gelagert ist und zur Antastung eines zu vermessenden Objekts 40 dient.

Das zu vermessende Objekt 40 ist auf der Grundplatte 22 angeordnet und kann so durch Verfahren des Portals 24, des Schlittens 26 und der Pinole 28 angetastet und vermessen werden.

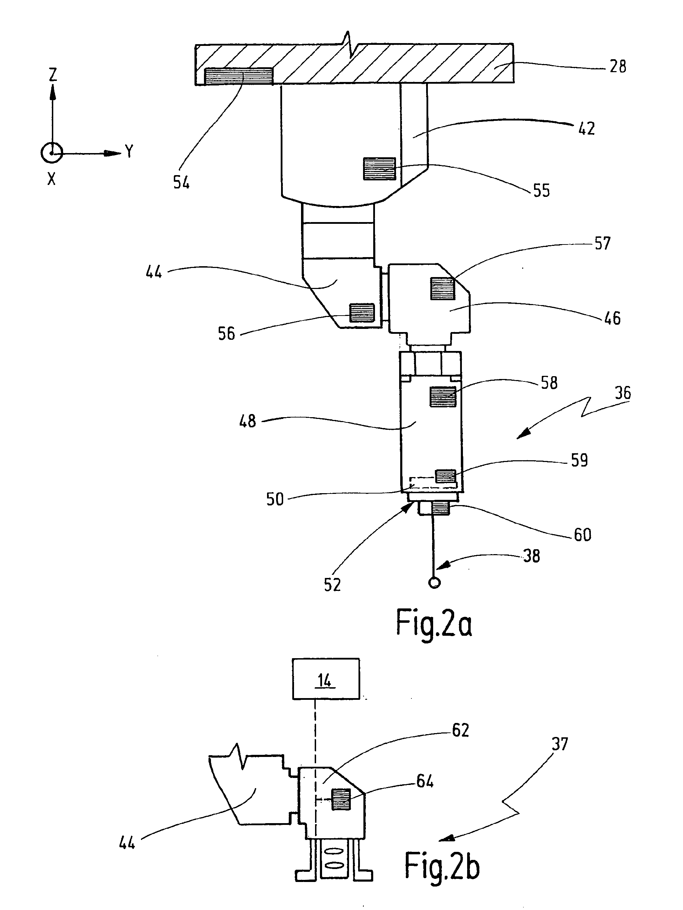

Fig. 2a zeigt eine schematische Ansicht möglicher Positionen für Lageänderungssensoren in dem Koordinatenmessgerät 12.

An der Pinole 28 ist in der Regel zunächst eine Befestigungsvorrichtung 42 vorgesehen, an der ein Dreh-Schwenk-Gelenk (DSG) 44 vorgesehen ist. Das DSG 44 dient dazu, den Sensor 36 in eine beliebige Richtung auszurichten, um den Taststift 38 geeignet an dem zu vermessenden Objekt 40 positionieren zu können. An dem DSG 44 ist ein Adapter 46 vorgesehen, der dazu dient, einen Übergang von dem DSG 44 zu einem Sensorkopf 48 bereitzustellen, um zu ermöglichen, verschiedene Sensoren 36 bzw. Sensorköpfe 48 mit demselben DSG 44 verwenden zu können.

In dem Sensorkopf 48 ist eine Tasteraufnahme 50 vorgesehen, die einen Taststiftteller 52 hält. An dem Taststiftteller 52 ist dann der eigentliche Taster 38 angeordnet. Der Taststiftteller 52 ist in der Tasteraufnahme 50 gekoppelt durch entsprechende Messaufnehmer (nicht dargestellt) angeordnet, die eine Auslenkung des Tasters 38 bzw. des Taststifttellers 52 erfassen und an die Steuerungseinheit 14 des Koordinatenmessgeräts 12 übermitteln.

In der beschriebenen Anordnung können an mehreren Positionen Lageänderungssensoren vorgesehen sein, die zur Erfassung einer Beschleunigung an der entsprechenden Stelle des entsprechenden Elements dienen. Es werden Beschleunigungssensoren verwendet, da die Beschleunigung als zweite Ableitung der Position den sensibelsten Schwankungen unterliegt und somit für die vorliegenden hochgenauen Messanforderungen die besten Daten liefert. Die Lageänderungssensoren können dazu vorgesehen sein, lediglich eine lineare Beschleunigung in einer Raumrichtung zu messen, es können aber auch rotatorische Beschleunigungen gemessen werden. Vorzugsweise ist vorgesehen, dass an jeder der beschriebenen Positionen ein Paket von Lageänderungssensoren vorgesehen ist, die rotatorische Beschleunigungen um alle drei Raumachsen (X, Y, Z) erfassen, so dass die Beschleunigung jedes Elements vollständig erfasst wird.

Grundsätzlich kann vorgesehen sein, dass Lageänderungssensoren nur an einer, mehreren oder aber auch an allen der vorgeschlagenen Positionen vorgesehen sind.

Eine erstes Paket von Lageänderungssensoren 54 befindet sich an einem Ende der Pinole 28. Auf diese Weise kann eine Beschleunigung des entsprechenden Endes der Pinole 28 und damit eine Lageänderung erfasst werden, die insbesondere durch Verfahren des Portals 24, des Schlittens 26 und der Pinole 28 bewirkt wird. Mittels von den Lageänderungssensoren 54 erfassten Sensordaten lässt sich insbesondere die Steuerung des Portals 24, des Schlittens 26 und der Pinole 28 überwachen. Es kann des Weiteren ein Abgleich mit den Daten der Skalen 30, 32, 34 stattfinden.

Weitere Lageänderungssensoren 55 oder 56 können Lageänderungen in der Befestigungsvorrichtung 42 und dem DSG 44, die zusammenfassend auch als "Sensor Carrier" bezeichnet werden, erfasst werden. Die erfassten Lageänderungen durch die Lageänderungssensoren 55 und 56 können insbesondere zur Überwachung der Steuerung des DSG 44 und einer möglichen Verbiegung des DSG 44 dienen. Auf diese Weise ist es möglich, eine tatsächliche Verbiegung des DSG 44 zu erfassen, ohne auf Modellparameter zurückgreifen zu müssen.

Ein weiteres mögliches Paket von Lageänderungssensoren 57 befindet sich in dem Adapter 46. Eine derartige Sensorposition bietet ähnliche Vorteile wie die der Lageänderungssensoren 55 und 56 und kann beispielsweise gemeinsam mit den Lageänderungssensoren 55 und 56 zur besseren Erfassung des Teils des Gesamtsystems verwendet werden.

Ein weiteres Paket von Lageänderungssensoren 58 befindet sich in dem Sensorkopf 48, wo insbesondere ein Paket von Lageänderungssensoren 59 nahe der Tasteraufnahme 50 vorgesehen sein kann. Mittels der Lageänderungssensoren 58 und 59 kann eine Beschleunigung des Sensorkopfs 48 insbesondere nahe an der Tasteraufnahme 50 erfasst werden und mit einer Beschleunigung des Tasters 38 verglichen werden. Zur Erfassung der Beschleunigung des Tasters 38 dient dabei ein weiteres Paket von Lageänderungssensoren 60, die an dem Taster oder an dem Taststiftteller 52 vorgesehen sind. Durch Vergleich der Daten der Lageänderungssensoren 58 bzw. 59 und 60 kann beispielsweise bei einem gewissen Auseinanderfallen der Beschleunigungsdaten daraus geschlossen werden, dass der Taster 38 das zu vermessende Objekt 40 angetastet hat.

Fig. 2b zeigt eine (nicht beanspruchte) mögliche Anordnung für den Fall, dass ein optischer Sensor 37 verwendet wird.

Von der Pinole 28 bis zu dem DSG 44 gleicht der Aufbau dem in Fig. 2a beschriebenen. An die DSG 44 schließt sich dann allerdings direkt der optische Sensor 37 an, der beispielsweise durch ein Kameramodul 62 gebildet ist. An dem Kameramodul 62 kann dann ein Paket von Lageänderungssensoren 64 angeordnet sein.

Für die Durchführung eines (nicht beanspruchten) Verfahrens zur Korrektur von Bilddaten des Kameramoduls 62 ist vorgesehen, die Lageänderungssensoren 64 und das Kameramodul 62 mit der Steuerungseinheit 14 zu verbinden. Auf diese Weise ist es möglich, den Betrieb des Kameramoduls 62 und der Lageänderungssensoren 64 zu synchronisieren. Etwa kann so der Beginn eines Aufnahmevorgangs des Kameramoduls 62 und das Ende eines Aufnahmevorgangs mit dem Beginn und dem Ende eines Messvorgangs der Lageänderungssensoren 64 synchronisiert werden, so dass entsprechend passende Bilddaten und Lageänderungsdaten erfasst werden. Diese können dann an die Steuerungseinheit 14 übermittelt und ausgewertet werden, insbesondere zur Korrektur der Bilddaten.

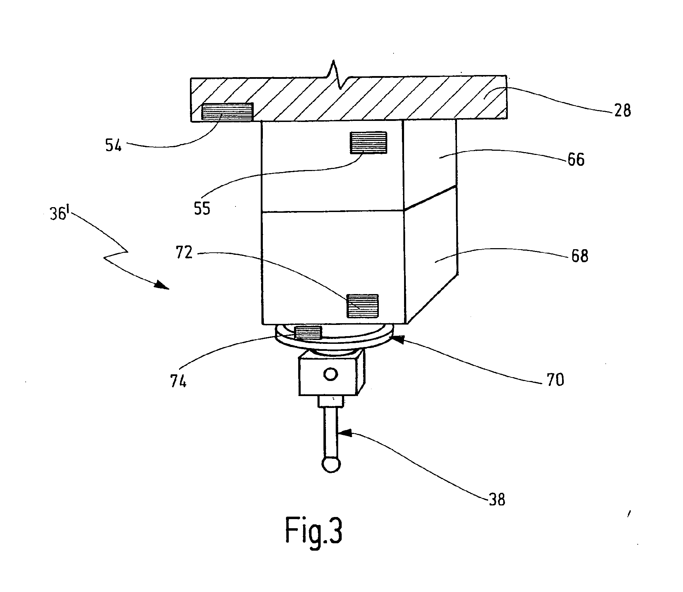

Fig. 3 zeigt einen weiteren taktilen Sensor 36' und mögliche Positionen zur Erfassung von Lageänderungsdaten. Der weitere taktile Sensor 36' ist ebenfalls an der Pinole 28 vorgesehen, so dass ebenfalls an der Pinole 28 ein Paket von Lageänderungssensoren 54 vorgesehen sein kann. An der Pinole 28 ist ein Kopfgehäuse 66 angebracht, das in etwa dem Sensor Carrier 42, 44, der in Fig. 2a dargestellt ist, entspricht. Entsprechend kann auch an dem Kopfgehäuse 66 ein zweites Paket von Lageänderungssensoren 55 vorgesehen sein.

An dem Kopfgehäuse 66 ist eine Tasterwechselstelle 68 angebracht, die zur Aufnahme eines Tastertellers 70 dient. Der Tasterteller 70 entspricht im Wesentlichen dem Taststiftteller 52. Auch an dem Tasterteller 70 ist der Taster 38 befestigt. Der Tasterteller 70 ist entsprechend in der Tasterwechselstelle 68 so gelagert, dass mittels geeigneter Messaufnehmer eine Auslenkung des Tasters 38 erfasst werden kann.

Entsprechend kann auch hier vorgesehen sein, dass ein Paket von Lageänderungssensoren 72 in der Tasterwechselstelle 68 vorgesehen ist, insbesondere möglichst nahe an dem Tasterteller 70. Ein weiteres Paket von Lageänderungssensoren 74 ist dann an dem Tasterteller 70 oder an dem Taster 38 selbst angebracht. Aus der Differenz der Lageänderungsdaten der Lageänderungssensoren 72 und 74 kann wiederum beispielsweise auf ein Antasten des zu vermessenden Objekts 40 rückgeschlossen werden.

Wie bereits erwähnt wurde, ist grundsätzlich vorgesehen, dass jedes Sensorpaket 54-60 bzw. 72-74 drei rotatorische Beschleunigungssensoren umfasst. Selbstverständlich sind hier jedoch auch Alternativen denkbar. Insbesondere können die Lageänderungssensoren 54-60 auch Pakete von 1 bis 3 Sensoren umfassen, die lineare Beschleunigung entlang entsprechender Achsen messen. Auch die Lageänderungssensoren 64 können entsprechend ausgestaltet sein. Gleiches gilt für die Lageänderungssensoren 72 und 74. Sensorpakete zur Messung von Winkelbeschleunigungen um ein bis drei Achsen können, wie bereits erwähnt wurde, insbesondere die Pakete von Lageänderungssensoren 54-60 aufweisen.

Selbstverständlich sind auch Kombinationen denkbar, insbesondere kann vorgesehen sein, dass die Pakete von Lageänderungssensoren 57-60 eine Kombination von zwei Winkelbeschleunigungsmesssensoren und einen linearen Beschleunigungsmesssensor aufweisen. Die lineare Beschleunigung wird dabei vorzugsweise in Z-Richtung gemessen.

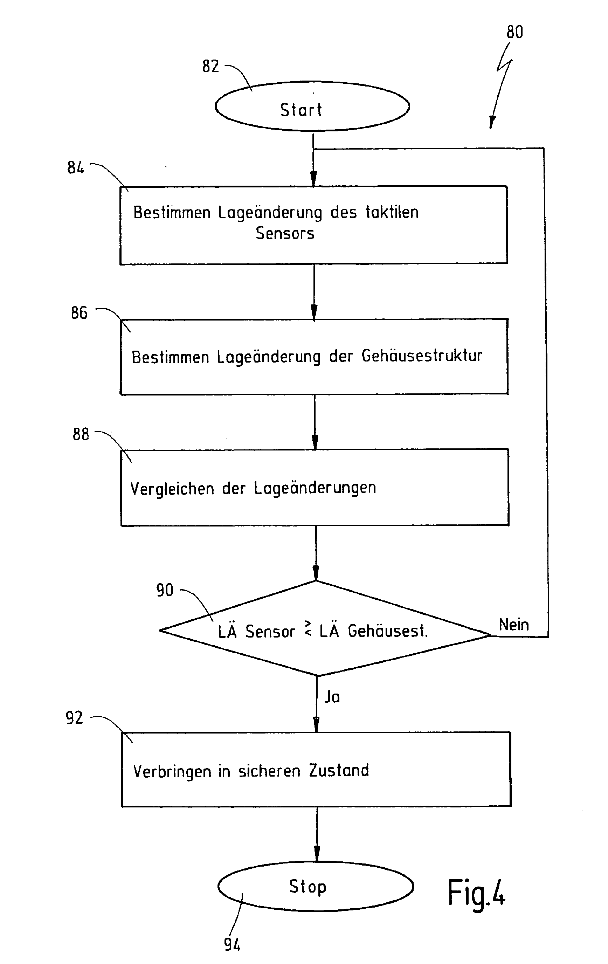

Fig. 4 zeigt ein Verfahren 80 zur Kollisionserkennung eines Koordinatenmessgeräts.

Das Verfahren 80 beginnt mit einem Schritt 82. In einem Schritt 84 wird fortlaufend eine Lageänderung, insbesondere eine Beschleunigung, des taktilen Sensors 36 erfasst. In einem Schritt 86, der auch parallel zu dem Schritt 84 ablaufen kann, wird eine Lageänderung einer von den Elementen 24 bis 28 und 42 bis 50 gebildeten Gehäusestruktur erfasst. Der Schritt 84 wird insbesondere mittels Lageänderungssensoren 74 bzw. 64 bzw. 60 durchgeführt. Die Lageänderungssensoren 54-59 und 72 dienen zur Erfassung der Lageänderung der Gehäusestruktur im Rahmen des Schritts 86.

Beim Schritt 88 wird fortlaufend ein Vergleich der in den Schritten 84 und 86 erfassten Lageänderungen durchgeführt.

Zur Bestimmung, ob der Taster 38 das zu vermessende Objekt 40 angetastet hat, wird insbesondere in einem Schritt 90 verglichen, ob eine Lageänderung des Sensors 36, die beispielsweise mittels der Lageänderungssensoren 60 erfasst wurde, mit einer entsprechenden Lageänderung der Gehäusestruktur, die beispielsweise mittels der Lageänderungssensoren 59 erfasst wurde, übereinstimmt. Stimmen die Beschleunigungsdaten überein, wird das Verfahren fortgeführt mit Schritt 84.

Wird eine Abweichung festgestellt, wird das Koordinatenmessgerät 12 in einem Schritt 92 in einen sicheren Zustand verbracht, beispielsweise durch Anhalten des Koordinatenmessgeräts 12 oder Zurückverfahren um ein bestimmtes Maß.

Selbstverständlich kann im Rahmen des Vergleichens in Schritt 90 ein Toleranzbereich vorgesehen sein, den die Abweichung zwischen den Lageänderungen verlassen muss, damit die Abweichung als Kollision definiert wird.

Selbstverständlich kann parallel ein weiterer Abgleich, beispielsweise mit Maximalwerten für die Beschleunigung des Koordinatenmessgeräts 12, durchgeführt werden. Ein solcher Abgleich kann beispielsweise dazu dienen, eine Kollision, beispielsweise des Sensorkopfs 48 mit einem Hindernis, festzustellen. Stimmen etwa die in Schritt 84 und Schritt 86 bestimmten Lageänderungen überein, überschreiten jedoch beide den vorher definierten Maximalwert, kann es der Fall sein, dass ein entsprechendes Element der Gehäusestruktur mit einem Hindernis kollidiert ist. Auch dann kann ein Schritt 92 zum Verbringen des Koordinatenmessgeräts 12 in einen sicheren Zustand nachgeschaltet sein.

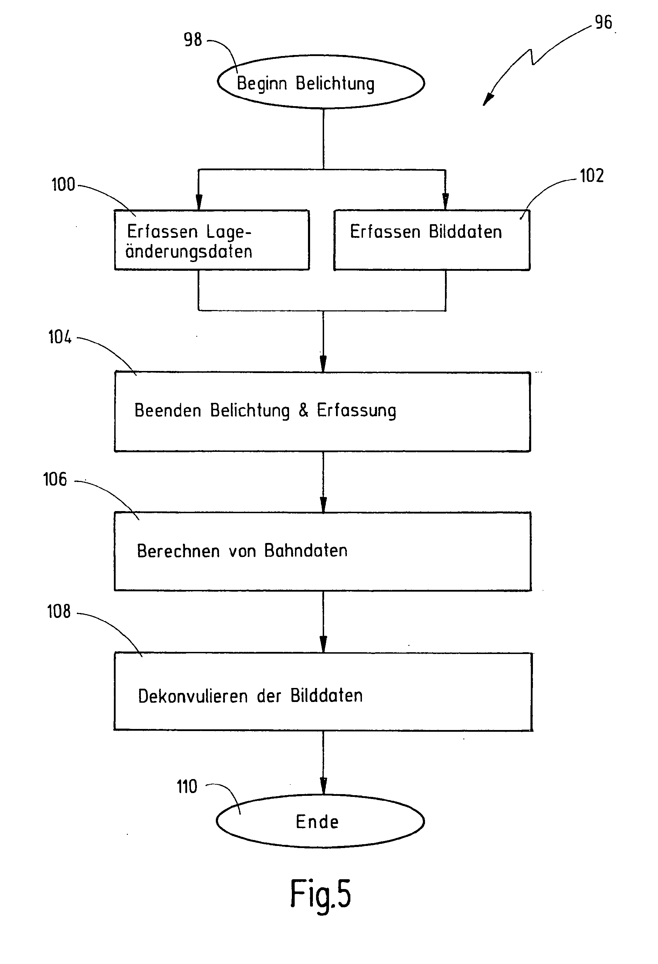

Fig. 5 zeigt ein (nicht beanspruchtes) Verfahren 96 zur Korrektur von Daten eines berührungsfreien, insbesondere eines optischen, Sensors 37.

Das Verfahren 96 beginnt mit einem Schritt 98, der dem Beginn der Belichtung des optischen Sensors 37 entspricht. Wie bereits erwähnt wurde, kann das Verfahren für sämtliche berührungsfreien Sensoren 37 verwendet werden, es wird im Folgenden jedoch lediglich auf einen optischen Sensor 37 Bezug genommen.

Der Beginn der Belichtung in Schritt 98 ist für die Steuerungseinheit 14 mit den Lageänderungssensoren 64 gekoppelt. Auf diese Weise wird eine Kombination der in einem Schritt 100 mittels der Lageänderungssensoren 64 erfassten Lageänderungsdaten und in einem parallelen Schritt 102 erfassten Bilddaten erzielt. Erfasste Beschleunigungsdaten können so zeitlich Bilddaten zugeordnet werden. Die Erfassung der Lageänderungsdaten in Schritt 100 und der Bilddaten in Schritt 102 endet in einem Schritt 104, wenn die Belichtungszeit des optischen Sensors 37 endet.

In einem Schritt 106 werden nun die Bahndaten des optischen Sensors 37 berechnet, d.h. die Bahn, die der optische Sensor 37 während des Messvorgangs vollzogen hat. Hierzu werden die von jedem Lageänderungssensor erfassten Beschleunigungsdaten integriert, so dass man die entsprechenden Geschwindigkeitsdaten erhält. Durch erneute Integration der Geschwindigkeitsdaten erhält man die entsprechenden Ortsdaten. Dabei ist zu beachten, dass bei der Integration von der Beschleunigung zur Geschwindigkeit eine erste Konstante, die zunächst unbekannt ist, anfällt, und bei der Integration von der Geschwindigkeit zur Bahn eine zweite Konstante anfällt. Es gilt jedoch, die erste Konstante, d.h. die Geschwindigkeit des optischen Sensors 37 zu Beginn des Messvorgangs, zu kennen. Diese kann beispielsweise Null betragen, d.h. der Schritt 98 wird begonnen, während der optische Sensor 37 ruht. Die zweite Konstante, die bei der Integration der Geschwindigkeit zu der Bahn entsteht, muss nicht bekannt sein. Die zweite Konstante wird lediglich zur Bestimmung der absoluten Bahndaten in dem absoluten Koordinatensystem (X, Y, Z) benötigt. Für die vorliegende Korrektur der Bilddaten genügen jedoch relative Bahndaten, d.h. der Bahnverlauf zwischen dem Ort zu Beginn des Messvorgangs und dem Ort am Ende des Messvorgangs.

Wird der Beschleunigungssensor innerhalb der Belichtungszeit mehrfach ausgelesen, können die Integrale in guter Näherung mit einer Summenfunktion approximiert werden. Es ist grundsätzlich von Vorteil, den Beschleunigungssensor so oft wie möglich innerhalb der Belichtungszeit auszulesen. Würde man lediglich die Werte zu Anfang und zu Ende des Belichtungsvorgangs kennen, würde man nur einen Gesamtwert ohne Information des Bahnverlaufs erhalten. Bei vielen ausgelesenen Zwischenwerten kann jedoch mit der Summenfunktion bzw. Teilintegralen der tatsächliche "Belichtungsweg", d.h. die von dem optischen Sensor 37 beschriebene Bahn, bestimmt werden.

Vorteilhafterweise ist vorgesehen, dass die Richtungen, in der die Beschleunigungen gemessen werden, die beiden lateralen Verschiebungen innerhalb einer Bildebene des optischen Sensors 37 umfassen und die dritte Richtung senkrecht auf der Bildebene steht und somit einen Defokus erfasst. Die auf die Bildebene bezogenen Daten können bei alternativen Anordnungen der Lageänderungssensoren und Messrichtungen aber auch aus den bekannten räumlichen Anordnungen der Lageänderungssensoren, des Umstands, ob eine lineare oder eine rotatorische Beschleunigung gemessen wird, und der bekannten räumlichen Anordnung des optischen Sensors 37 umgerechnet werden.

Werden die Bahndaten in dem Schritt 106 bestimmt, können die erfassten Bilddaten in einem Schritt 108 dekonvuliert werden. D.h. aufgrund der bekannten Bahndaten kann die Unschärfe der Bilddaten, die durch die Bewegung des optischen Sensors 37 verursacht wurde, herausgerechnet werden.

Am Ende des Schritts 108 erhält man somit die gewünschten korrigierten Bilddaten.

Das Verfahren endet schließlich in einem Schritt 110.

## Patentansprüche

1. Koordinatenmessgerät (12) mit einem Sensor (36) zum Vermessen eines Objekts (40) und mit einer Gehäusestruktur (28, 42, 44, 46, 48) zum Halten und Positionieren des Sensors (36), wobei mindestens ein Lageänderungssensor (54, 56, 58, 60, 72, 74) vorgesehen ist, um eine Lageänderung des Sensors (36) und der Gehäusestruktur (28, 42, 44, 46, 48) zu erfassen, **dadurch gekennzeichnet, dass** der Sensor (36) zum Vermessen des Objekts (40) ein taktiler Sensor (36) ist und ein erster Lageänderungssensor (54, 56, 58, 60, 72, 74) vorhanden ist, um eine erste Beschleunigung des taktilen Sensors (36) zu erfassen, und mindestens ein zweiter Lageänderungssensor (54, 56, 58, 60, 72, 74) vorhanden ist, um eine zweite Beschleunigung der Gehäusestruktur (28, 42, 44, 46, 48) zu erfassen, wobei eine Richtung der ersten Beschleunigung und eine Richtung der zweiten Beschleunigung identisch sind.

2. Koordinatenmessgerät nach Anspruch 1, wobei mehrere Lageänderungssensoren (54, 56, 58, 60, 72, 74) vorhanden sind, um eine Lageänderung des Sensors (36, 37) und der Gehäusestruktur (28, 42, 44, 46, 48) in drei Raumrichtungen zu erfassen.

3. Koordinatenmessgerät nach Anspruch 1 oder 2, wobei die Lageänderungssensoren (54, 56, 58, 60, 72, 74) dazu ausgelegt sind, eine lineare und/oder rotatorische Beschleunigung zu erfassen.

4. Verfahren (80) zur Kollisionserkennung eines Koordinatenmessgeräts (12) mit einem taktilen Sensor (36) zum Vermessen eines Objekts (40) und mit einer Gehäusestruktur (28, 42, 44, 46, 48) zum Halten und Positionieren des taktilen Sensors (36), mit den folgenden Schritten:
Bestimmen (84, 86) mindestens einer Lageänderung des taktilen Sensors (36) und der Gehäusestruktur (28, 42, 44, 46, 48) mittels mindestens eines Lageänderungssensors (54, 56, 58, 60, 72, 74),
Vergleichen (88, 90) der mindestens einen Lageänderung mit mindestens einem entsprechenden Sollwert,
Verbringen (92) des Koordinatenmessgeräts (12) in einen sicheren Zustand, falls die mindestens eine Lageänderung um ein vorbestimmtes Maß von dem mindestens einen entsprechenden Sollwert abweicht, **dadurch gekennzeichnet, dass** eine erste Beschleunigung des taktilen Sensors (36) mittels mindestens eines ersten Lageänderungssensors (54, 56, 58, 60, 72, 74) gemessen wird und wobei mindestens eine zweite Beschleunigung der Gehäusestruktur (28, 42, 44, 46, 48) mittels mindestens eines zweiten Lageänderungssensors (54, 56, 58, 60, 72, 74) gemessen wird, wobei die erste Beschleunigung der Sollwert ist und die zweite Beschleunigung mit dem Sollwert verglichen wird.

5. Verfahren nach Anspruch 4, wobei der Sollwert ein für das Koordinatenmessgerät (12) festgelegter Maximalwert ist, und das Verbringen erfolgt, falls die mindestens eine Lageänderung größer als der Maximalwert ist.

## Claims

1. Coordinate measuring device (12) having a sensor (36) for measuring an object (40), and having a housing structure (28, 42, 44, 46, 48) for holding and positioning the sensor (36), wherein at least one position change sensor (54, 56, 58, 60, 72, 74) is provided in order to detect a change in position of the sensor (36) and of the housing structure (28, 42, 44, 46, 48), **characterized in that** the sensor (36) for measuring the object (40) is a tactile sensor (36), and a first position change sensor (54, 56, 58, 60, 72, 74) is present in order to detect a first acceleration of the tactile sensor (36), and at least one second position change sensor (54, 56, 58, 60, 72, 74) is present in order to detect a second acceleration of the housing structure (28, 42, 44, 46, 48), a direction of the first acceleration and a direction of the second acceleration being identical.

2. Coordinate measuring device according to Claim 1, wherein a plurality of position change sensors (54, 56, 58, 60, 72, 74) are present in order to detect a change in position of the sensor (36, 37) and of the housing structure (28, 42, 44, 46, 48) in three spatial directions.

3. Coordinate measuring device according to Claim 1 or 2, wherein the position change sensors (54, 56, 58, 60, 72, 74) are designed to detect a linear and/or rotational acceleration.

4. Method (80) for collision detection of a coordinate measuring device (12) having a tactile sensor (36) for measuring an object (40), and having a housing structure (28, 42, 44, 46, 48) for holding and positioning the tactile sensor (36), having the following steps:
determining (84, 86) at least one change in position of the tactile sensor (36) and of the housing structure (28, 42, 44, 46, 48) by means of at least one position change sensor (54, 56, 58, 60, 72, 74),
comparing (88, 90) the at least one change in position with at least one corresponding desired value, and
putting (92) the coordinate measuring device (12) into a safe state if the at least one change in position deviates by a predetermined measure from the at least one corresponding desired value, **characterized in that** a first acceleration of the tactile sensor (36) is measured by means of at least one first position change sensor (54, 56, 58, 60, 72, 74), and wherein at least one second acceleration of the housing structure (28, 42, 44, 46, 48) is measured by means of at least one second position change sensor (54, 56, 58, 60, 72, 74), the first acceleration being the desired value, and the second acceleration being compared with the desired value.

5. Method according to Claim 4, wherein the desired value is a maximum value fixed for the coordinate measuring device (12), and the putting-into-a-safe-state is performed if the at least one change in position is greater than the maximum value.

## Revendications

1. Appareil de mesure de coordonnées (12) comportant un capteur (36) destiné à mesurer un objet (40) et une structure de boîtier (28, 42, 44, 46, 48) destinée à maintenir et à positionner le capteur (36), dans lequel il est prévu au moins un capteur de modification de position (54, 56, 58, 60, 72, 74) pour détecter une modification de position du capteur (36) et de la structure de boîtier (28, 42, 44, 46, 48), **caractérisé en ce que** le capteur (36) est un capteur tactile (36) destiné à mesurer l'objet (40) et **en ce qu'**un premier capteur de modification de position (54, 56, 58, 60, 72, 74) est présent afin de détecter une première accélération du capteur tactile (36), et **en ce qu'**au moins un second capteur de modification de position (54, 56, 58, 60, 72, 74) est présent afin de détecter une seconde accélération de la structure de boîtier (28, 42, 44, 46, 48), dans lequel une direction de la première accélération et une direction de la seconde accélération sont identiques.

2. Appareil de mesure de coordonnées selon la revendication 1, dans lequel une pluralité de capteurs de mesure de position (54, 56, 58, 60, 72, 74) sont présents afin de détecter une modification de position du capteur (36, 37) et de la structure de boîtier (28, 42, 44, 46, 48) dans trois directions spatiales.

3. Appareil de mesure de coordonnées selon la revendication 1 ou 2, dans lequel les capteurs de modification de position (54, 56, 58, 60, 72, 74) sont conçus pour détecter une accélération linéaire et/ou de rotation.

4. Procédé (80) de détection de collision d'un appareil de mesure de coordonnées (12) comportant un capteur tactile (36) destiné à mesurer un objet (40) et une structure de boîtier (28, 42, 44, 46, 48) destinée à maintenir et à positionner le capteur tactile (36), comprenant les étapes consistant à :
déterminer (84, 86) au moins une modification de position du capteur tactile (36) et de la structure de boîtier (28, 42, 44, 46, 48) au moyen d'au moins un capteur de modification de position (54, 56, 58, 60, 72, 74),
comparer (88, 90) l'au moins une modification de position à au moins une valeur nominale correspondante,
faire passer (92) l'appareil de mesure de coordonnées (12) dans un état sécurisé dans le cas où l'au moins une modification de position s'écarte d'une quantité prédéterminée de l'au moins une valeur nominale, **caractérisé en ce qu'**une première accélération du capteur tactile (36) est mesurée au moyen d'au moins un premier capteur de modification de position (54, 56, 58, 60, 72, 74) et dans lequel au moins une seconde accélération de la structure de boîtier (28, 42, 44, 46, 48) est mesurée au moyen d'au moins un second capteur de modification de position (54, 56, 58, 60, 72, 74), dans lequel la première accélération est la valeur nominale et la seconde accélération est comparée à la valeur nominale.

5. Procédé selon la revendication 4, dans lequel la valeur nominale est une valeur maximale établie pour l'appareil de mesure de coordonnées (12), et dans lequel le passage à l'état sécurisé est effectué dans le cas où l'au moins une modification de position est supérieure à la valeur maximale.
